(19) Europäisches Patentamt
European Patent Office
Office européen des brevets

(11) EP 1 090 016 B1

(12) EUROPEAN PATENT SPECIFICATION

(45) Date of publication and mention of the grant of the patent: **30.10.2002 Bulletin 2002/44**

(21) Application number: **99929522.3**

(22) Date of filing: **30.06.1999**

(51) Int Cl.[7]: **C07F 9/50** // C07M7:00

(86) International application number: **PCT/GB99/02065**

(87) International publication number: **WO 00/000498 (06.01.2000 Gazette 2000/01)**

# (54) THE PREPARATION OF ARYLPHOSPHINES

DIE HERSTELLUNG VON ARYLPHOSPHINEN

PREPARATION D'ARYLPHOSPHINES

(84) Designated Contracting States:
**AT BE CH DE DK ES FI FR GB GR IE IT LI LU NL PT SE**

(30) Priority: **30.06.1998 GB 9814170**

(43) Date of publication of application:
**11.04.2001 Bulletin 2001/15**

(73) Proprietor: **Chirotech Technology Limited
Cambridge CB4 0WG (GB)**

(72) Inventors:
- **WINTER, Stephen Benedict David
Milton Road, Cambridge CB4 0WG (GB)**
- **LENNON, Ian Campbell
Milton Road, Cambridge CB4 0WG (GB)**

(74) Representative: **Perry, Robert Edward
GILL JENNINGS & EVERY
Broadgate House
7 Eldon Street
London EC2M 7LH (GB)**

(56) References cited:
**WO-A-93/12260 WO-A-99/24444
US-A- 5 399 771**

- **SCOTT R. GILBERTSON: "Palladium-catalyzed synthesis of phosphine-containing amino acids" JOURNAL OF ORGANIC CHEMISTRY., vol. 61, no. 9, - 3 May 1996 (1996-05-03) pages 2922-2923, XP002094880 EASTON US cited in the application**
- **HERD O ET AL: "Water soluble phosphines VIII. Palladium-catalyzed P-C cross coupling reactions between primary or secondary phosphines and functional aryliodides -- a novel synthetic route to water soluble phosphines" JOURNAL OF ORGANOMETALLIC CHEMISTRY, vol. 522, no. 1, 6 September 1996 (1996-09-06), page 69-76 XP004036434 cited in the application**
- **WILSON S R ET AL: "PREPARATION OF A NEW CLASS OF C2-SYMMETRIC CHIRAL PHOSPHINES: THE FIRST ASYMMETRIC STAUDINGER REACTION" SYNLETT, no. 4, 1 April 1990 (1990-04-01), page 199/200 XP000114769**
- **AGER D J ET AL: "CONVENIENT AND DIRECT PREPARATION OF TERTIARY PHOSPHINES VIA NICKEL-CATALYSED CROSS-COUPLING" CHEMICAL COMMUNICATIONS, vol. 24, 21 December 1997 (1997-12-21), page 2359/2360 XP002066497 cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 090 016 B1

## Description

Field of the Invention

This invention relates to processes suitable for the large scale preparation of arylphosphines, especially those useful as ligand precursors or ligands in asymmetric allylic substitution catalysts.

Background of the Invention

Chiral phosphine ligands such as (**1**) and (**2**)

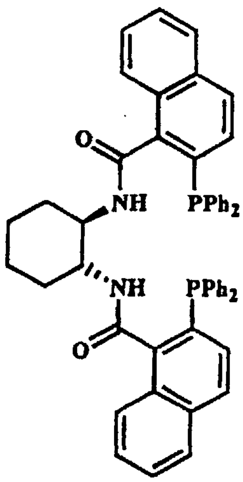

(1)

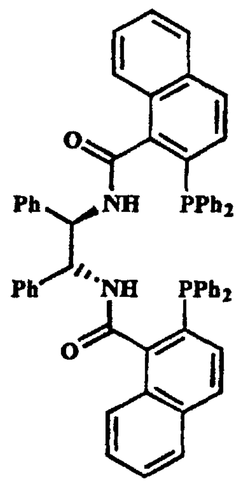

(2)

and the opposite enantiomers thereof, have been shown to be effective in palladium(0)-catalysed asymmetric allylic substitution reactions. For a review, see Trost and Van Vranken, Chem Rev. (1996) 96: 395. See also US-A-5739396.

Such catalysts are eminently suitable for industrial applications, especially for the provision of chiral pharmaceutical intermediates such as phthalimidovinyl glycinol, in high enantiomeric purity. For this purpose, and in other industrial applications such as flavour and fragrance fine chemicals, the development of manufacturing processes requires in turn large amounts of a ligand such as (**1**) or (**2**), e.g. in kilogram quantity or greater. Thus, there is a requirement for efficient and scaleable methods for synthesis of such ligands.

A key intermediate in the synthesis of these ligands is 2-diphenylphosphino-1-naphthoic acid and derivatives thereof. Several processes for the synthesis of arylphosphines from aryl triflates have been described in the literature.

For example, WO-A-9312260 and US-A-5739396 disclose the reaction of trimethylsilyldiphenylphosphine, an aryl iodide and bis(benzonitrile)palladium dichloride in toluene at reflux. Trimethylsilyldiphenylphosphine is expensive and not readily available. This procedure gives only moderate yields (60%) and requires silica chromatography for purification of the product. Bis(benzonitrile)palladium dichloride is also expensive, and a high catalyst loading is used (5 mol%).

Another known process comprises the reaction of an aryl triflate with chlorodiphenylphosphine, a reductant (zinc) and a nickel catalyst in DMF at 100°C; see Ager *et al*, Chem. Commun. (1997) 2359. This procedure typically requires a high catalyst loading (4 - 10 mol%) and can involve prolonged heating at reflux. The nickel catalyst is highly toxic and, as well as considerations for operator safety and residue disposal, filtration through a plug of silica is typically required to remove the catalyst.

Cai *et al,* J. Org. Chem. (1994) 59:7180-1, and US-5399771 disclose the preparation of BINAP using the appropriate aryl triflate with diphenylphosphine. The preferred catalyst is nickel, palladium catalysis giving no reaction al all. Cai *et al* reports that DMF is the only satisfactory solvent. A chelating phosphine was also present.

Gilbertson *et al*, J. Org. Chem. (1996) 61:2922-3, discloses the palladium-catalysed conversion of aryl triflates, specifically tyrosine derivatives, to the corresponding aryl diphenylphosphines, by reaction with diphenylphosphine. The solvent is DMSO. It is reported that the reaction does not take place in DMF, using palladium. The Supplementary Material shows that 5 mol% of each of the catalyst $Pd(OAC)_2$ and 1,4-bis(diphenylphosphino)butane, i.e. a chelating

phosphine, are used. Isolation of pure aryl diphenylphosphine products requires conversion to the corresponding phosphine sulfide, column chromatography and desulfurization with Raney nickel.

Reaction of diphenylphosphine, a base, palladium catalyst and aryl iodide (or bromide) also gives the corresponding triarylphosphine; see Werd *et al*, J. Organomet. Chem. (1996), 522: 69. For the synthesis of ligand (1) or (2), however, a 2-iodo- or 2-bromo-1-naphthoic acid derivative is not readily accessible.

Summary of the Invention

The present invention is based on the discovery of an alternative process for preparing aryl phosphines, which allows the limitations of the prior art to be overcome. In particular, it has been discovered that an aryl sulfonyloxy compound can participate in a cross-coupling reaction with diphenylphosphine and palladium catalyst, without many of the restrictions that prejudice the development of an efficient, scaleable and economical synthesis of phosphines. The invention concerns the use of sulfonyloxy derivatives, readily prepared from the parent phenol, with a phosphine ($HPR^2R^3$), a base and palladium catalyst, in the following reaction:

$$R^1OC\text{-}Ar\text{-}OSO_2R^4 \rightarrow R^1OC\text{-}Ar\text{-}PR^2R^3$$

The group $R^1$ may be an alkoxy or amino group. The groups $R^2$ and $R^3$ are any hydrocarbon group including, for example, aryl and alkyl. The group $R^4$ may be an aryl or alkyl group including those with halogen substitution.

Each of the respective R groups may optionally be substituted with one or more non-interfering group. Each such group may be of, for example, up to 20 C atoms.

One advantage of this invention is that no chelating phosphine is required. Another is that the solvent is not critical, thereby allowing the use of common, easy-to-handle organic solvents such as toluene and acetonitrile. Without wishing to be bound by theory, these two factors may be linked.

A further advantage of the invention is that the catalyst loading need not be especially high. For example, it is typically less than 1%, and often less than 0.5% (mol % relative to sulfonate). In particular, one-to-one stoichiometries of the phosphine and sulfonyloxy compound may be used, and with low catalyst loadings, for example 0.4 mol%, purification of the product is relatively simple.

In summary, this invention allows the aryl phosphine to be manufactured economically on a large scale. Material of reproducible quality can be manufactured in high yields.

Description of the Invention

Ar may represent any aromatic nucleus, mono or poly-cyclic, with or without hetero atoms such as N, O or S. Although the respective points of substitution of the $COR^1$ and $PR^2R^3$ groups on the nucleus are not thought to be critical, they are typically in 1,2, 1,3 or 1,4-relationship on a benzene ring that is optionally otherwise substituted and/or fused to another ring or ring system. Thus, for example, a starting material for use in the invention may have the formula

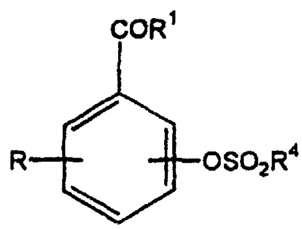

wherein R is any non-interfering substituent or represents a fused ring, optionally bearing any non-interfering substituent.

Ar is most preferably naphthyl. $R^1$ is preferably alkoxy, more preferably methoxy.

A preferred embodiment of the present invention is a process for the preparation of 2-diphenylphosphino-1-naphthoic acid and derivatives thereof, for example those compounds therein where $R^2$ and $R^3$ are both phenyl and $R^1OC$-Ar is 1-carboalkoxy-2-naphthyl. See the reaction shown in Example 1.

The preferred catalyst for this invention is a palladium (II) salt, more preferably palladium (II) acetate. The preferred base is a tertiary amine, more preferably triethylamine. The preferred groups for $R^4$ are perfluoroalkyl groups,

including trifluoromethyl and perfluoro-1-butyl.

Typically the reagents are heated together at reflux in an appropriate solvent, for example toluene or acetonitrile, e.g. for approximately 16 hours. The solvent can be much less volatile than DMSO, e.g. boiling below I25°C. Progress of the reaction may be monitored by TLC or taking aliquots for analysis by $^1$H NMR or $^{31}$P NMR.

The following Examples illustrate the present invention. The Preparations illustrate starting materials.

**Preparation 1 Methyl 2-hydroxy-1-naphthoate**

Dicyclohexylcarbodiimide (1.20 Kg, 5.8 mol, 1.1 eq) was added portionwise over 4.5 hours to a cooled, mechanically-stirred slurry of 2-hydroxy-1-naphthoic acid (1.00 Kg, 5.3 mol) in methanol (3 L) under nitrogen. The internal temperature was maintained between 10 and 15°C during the addition. Once the addition was complete, the mixture was allowed to warm to ambient temperature and stirred for 16 hours. The methanol was removed under reduced pressure and the residue taken up in ethyl acetate (5 L) and heated with stirring to 64°C (internal temperature) and then allowed to cool once again to ambient temperature. The mixture was filtered, and the solid washed with ethyl acetate (0.7 L). The ethyl acetate solutions were combined and concentrated under reduced pressure. The residue (2.5Kg) was recrystallised from ethanol-water(9:1,3.3 L)and dried under vacuum at ambient temperature.
Yield 0.92 Kg, 85%

**Preparation 2 Methyl 2-trifluoromethanesulfonyloxy-1-naphthoate**

Trifluoromethanesulfonic anhydride (492 g, 1.74 mol, 1.1 eq) in dichloromethane (0.5 L) was added over 1.5 hours to a suspension of methyl 2-hydroxy-1-naphthoate (319 g, 1.58 mol) and pyridine (330 ml, 4.08 mol, 2.6 eq) in dichloromethane (1.7 L) maintained at an internal temperature between -70 and -50°C, under nitrogen. Once the addition was complete, the mixture was allowed to warm to ambient temperature and stirred for 16 hours, after which time all solids had dissolved. Methyl *tert*-butyl ether (MTBE, 2.5 L) was added, causing precipitation. The solids were removed by filtration and washed with MTBE (0.5 L). The MTBE solutions were combined and washed with 2 N HCl (aq) (0.3 L then 0.2 L), water (2 × 2.5 L) and brine (2 L). The organic layer was dried ($MgSO_4$), filtered and concentrated under reduced pressure. The residue was dissolved in toluene (2.5 L) and washed with 1 N NaOH (aq) (0.5 L), water (2.5 L) and brine (1 L). The toluene solution was dried ($MgSO_4$), filtered and concentrated under reduced pressure. Initially a slightly brown oil, the product crystallised on standing.
Yield 438.5 g, 83%

**Preparation 3 Methyl 2-trifluoromethanesulfonyloxysalicylate**

Trifluoromethanesulfonic anhydride (28.4 mL, 169 mmol, 1.1 eq) was added to a solution of methyl salicylate (20 mL, 154 mmol) and pyridine (31 mL, 385 mmol, 2.5 eq) in dichloromethane (150 mL) maintained at an internal temperature about -40 °C, under nitrogen. Once the addition was complete, the mixture was allowed to warm to ambient temperature and stirred for 16 hours. Toluene (150 mL) was added causing precipitation. The solids were removed by filtration and washed with toluene (20 mL). The organic solutions were combined and washed with 2 N HCl (aq) (2 x 50 mL), water (100 mL), saturated aqueous sodium carbonate solution (100 mL) and brine (100 mL). The organic layer was dried ($MgSO_4$), filtered and concentrated under reduced pressure.
Yield 41.93 g, 96%

**Preparation 4 Methyl 2-(perfluoro-1-butanesulfonyloxy)-1-napthoate**

Perfluoro-1-butanesulfonyl fluoride (19 mL, 106 nunol, 1 eq) was added to a solution of methyl 2-hydroxy-1-naphthoate (21.25 g, 105 mmol, 1 eq) and triethylamine (15 mL, 108 mmol, 1 eq) in tetrahydrofuran (150 mL) maintained at an internal temperature about 0 °C, under nitrogen. Once the addition was complete, the mixture was allowed to warm to ambient temperature and stirred for 64 hours. Toluene (150 mL) was added causing some precipitation. The solids were removed by filtration through Celiteä and washed with toluene (20 mL). The organic solutions were combined and washed with 2 N HCl (aq) (2 x 50 mL), water (100 mL), saturated aqueous sodium carbonate solution (100 mL) and brine (100 mL). The organic layer was dried ($MgSO_4$), filtered and concentrated under reduced pressure.
Yield 48.79 g, 95%

**Example 1 Methyl 2-diphenylphosphino-1-naphthoate**

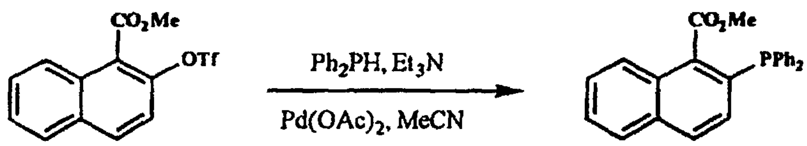


A stirred solution of methyl 2-trifluoromethanesulfonyloxy-1-naphthoate (52.7 g, 158 mmol, 1 eq), triethylamine (26.5 ml, 190 mmol, 1.2 eq) and palladium acetate (0.15 g, 0.7 mmol, 0.004 eq) in acetonitrile (600 ml) was sparged with nitrogen for 30 minutes. Diphenylphosphine (29.4 g, 158 mmol, 1 eq) was added instantly giving a red coloration. The solution was heated at reflux under nitrogen for 17 hours. The blood-red solution was allowed to cool and concentrated under reduced pressure to approximately halfits original volume. Methanol (50 ml) was added and the mixture concentrated a little more under reduced pressure. The product crystallised from this mixture and was collected byfiltration and washed with ice-cold methanol (200 ml) and dried under vacuum at ambient temperature; $^{31}P$ NMR (162 mHz; $CDCl_3$): δ -7.8.
Yield 54.1 g, 92%

The product may be converted to a ligand (1) or (2), or the opposite enantiomer thereof, by known procedures.

**Example 2 Methyl 2-diphenylphosphino-1-naphthoate from methyl 2-(perfluoro-1-butanesulfonyloxy)-1-naphthoate**

Diphenylphosphine (0.51 mL g, 2.93 mmol, 1 eq) was added to a stirred solution of methyl 2-perfluoro-1-butanesulfonyloxy-1-naphthoate (1.431 g, 2.95 mmol, 1 eq), triethylamine (0.45 mL, 3.23 mmol, 1.1 eq) and palladium acetate (0.005 g, 0.02 mmol, 0.007 eq) in degassed acetonitrile (10 mL) instantly giving a red coloration. The solution was heated at reflux under nitrogen for 17 hours. The blood-red solution was allowed to cool and an aliquot taken for NMR analysis.
$^{31}P$ NMR showed complete consumption of diphenylphosphine and formation of substantially one product, the desired triarylphosphine, identical to that described in Example 1.

**Example 3 Methyl 2-diphenylphosphino-1-naphthoate (toluene as solvent)**

Diphenylphosphine (0.72 mL, 4.14 mmol, 1 eq) was added to a stirred solution of methyl 2-trifluoromethanesulfonyloxy-1-naphthoate (1.389 g, 4.16 mmol, 1 eq), triethylamine (0.64 mL, 4.59 mmol, 1.1 eq) and palladium acetate (0.005 g, 0.02 mmol, 0.005 eq) in degassed toluene (10 mL) instantly giving a red coloration. The solution was heated at reflux under nitrogen for 17 hours. The blood-red solution was allowed to cool and an aliquot taken for NMR analysis.
$^{31}P$ NMR showed complete consumption of diphenylphosphine and formation of substantially one product, the desired triarylphosphine, identical to that described in Example 1.

**Example 4 Methyl 2-diphenylphosphino-1-naphthoate (DMF as solvent)**

Diphenylphosphine (0.72 mL, 4.14 mmol, 1 eq) was added to a stirred solution of methyl 2-trifluoromethanesulfonyloxy-1-naphthoate (1.384 g, 4.14 mmol, 1 eq), triethylamine (0.64 mL, 4.59 mmol, 1.1 eq) and palladium acetate (0.005 g, 0.02 mmol, 0.005 eq) in degassed DMF (10 mL) instantly giving a red coloration. The solution was heated at reflux under nitrogen for 17 hours. The blood-red solution was allowed to cool and an aliquot taken for NMR analysis.
$^{31}P$ NMR showed complete consumption of diphenylphosphine and formation of substantially one product, the desired triarylphosphine, identical to that described in Example 1.

**Example 5 Methyl 2-Diphenylphosphino-1-naphthoate (DMSO as solvent)**

Diphenylphosphine (0.72 mL, 4.14 mmol, 1 eq) was added to a stirred solution of methyl 2-trifluoromethanesulfonyloxy-1-naphthoate (1.373 g, 4.11 mmol, 1 eq), triethylamine (0.64 mL, 4.59 mmol, 1.1 eq) and palladium

acetate (0.005 g, 0.02 mmol, 0.005 eq) in degassed DMSO (10 mL) instantly giving a red coloration. The solution was heated at reflux under nitrogen for 17 hours. The blood-red solution was allowed to cool and an aliquot taken for NMR analysis.
$^{31}$P NMR showed complete consumption of diphenylphosphine and formation of the desired triarylphosphine as the major product, and a second product (ca 25% of mixture), having a chemical shift consistent with the oxide of triarylphosphine, δ (162 MHz, $CDCl_3$) +31.2.

**<u>Example 6</u> Methyl 2-diphenylphosphino-1-naphthoate (acetonitrile as solvent, with 1,4-bis (diphenylphosphino)butane additive)**

Diphenylphosphine (0.55 mL, 3.16 mmol, 1 eq) was added to a stirred solution of methyl 2-trifluoromethanesulfonyloxy-1-naphthoate (1.047 g, 3.13 mmol, 1 eq), triethylamine(0.5 mL, 3.59 mmol, 1.1 eq), 1,4-bis(diphenylphosphino)butane (dppb) (0.03 g, 0.07 mmol, 0.02 eq) and palladium acetate (0.005 g, 0.02 mmol, 0.006 eq) in degassed MeCN (10 mL) instantly giving a red coloration. The solution was heated at reflux under nitrogen for 17 hours. The blood-red solution was allowed to cool and an aliquot taken for NMR analysis.
$^{31}$P NMR showed complete consumption of diphenylphosphine and formation of the desired triarylphosphine as the major product, and a second product (ca 32% of mixture), having a chemical shift consistent with the oxide of triarylphosphine, δ(162 MHz, $CDCl_3$) +31.2.

**<u>Example 7</u> Methyl 2-diphenylphosphinobenzoate**

Diphenylphosphine (0.94 mL, 5.40 mmol, 1 eq) was added to a stirred solution of methyl 2-trifluoromethanesulfonyloxybenzoate (1.531 g, 5.39 mmol, 1 eq), triethylamine (0.85 mL, 6.1 mmol, 1.1 eq) and palladium acetate (0.005 g, 0.02 mmol, 0.004 eq) in degassed MeCN (10 mL) instantly giving a red coloration. The solution was heated at reflux under nitrogen for 17 hours. The blood-red solution was allowed to cool and an aliquot taken for NMR analysis.
$^{31}$P NMR showed complete consumption of diphenylphosphine and formation of substantially one product, the desired triarylphosphine, δ (162 MHz, $CDCl_3$)-3.3.

## Claims

1. A process for preparation of an arylphosphine of the formula

$$R^1OC\text{-}Ar\text{-}PR^2R^3$$

wherein Ar is aryl or heteroaryl; $R^1$ is an alkoxy or amine group; and $R^2$ and $R^3$ are each any hydrocarbon group; and each of the respective groups may optionally be substituted with any non-interfering group; which comprises the reaction of a sulfonyloxy compound of the formula

$$R^1OC\text{-}Ar\text{-}OSO_2R^4$$

wherein $R^4$ is alkyl, haloalkyl, perhaloalkyl, aryl, aralkyl or alkaryl, with a secondary or primary phosphine of the formula $HPR^2R^3$, in a solvent and in the presence of a palladium catalyst and a base.

2. A process according to claim 1, wherein the catalyst is a palladium (II) salt

3. A process according to claim 2, wherein the catalyst is palladium (II) acetate.

4. A process according to any preceding claim, wherein the base is a tertiary amine.

5. A process according to claim 4, wherein the base is triethylamine.

6. A process according to any preceding claim, wherein $R^2$ and $R^3$ are each aryl or alkyl.

7. A process according to claim 6, wherein $R^2$ and $R^3$ are each optionally substituted phenyl.

**8.** A process according to any preceding claim, wherein Ar bears the $COR^1$ and $OSO_2R^4$ groups in a 1,2-relationship.

**9.** A process according to any preceding claim, wherein the sulfonyloxy compound has the formula

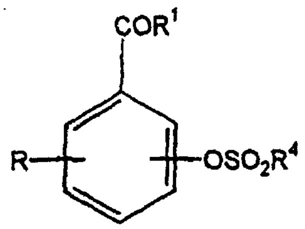

wherein R is any non-interfering substituent or represents a fused ring optionally bearing any non-interfering substituent.

**10.** A process according to claim 8 or claim 9, wherein Ar is naphthyl.

**11.** A process according to any preceding claim, wherein $R^1$ is alkoxy, e.g. methoxy.

**12.** A process according to claim 8, wherein the arylphosphine has the formula

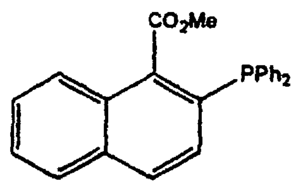

**13.** A process according to any preceding claim, wherein $R^4$ is perfluoroalkyl.

**14.** A process according to claim 13, wherein $R^4$ is trifluoromethyl.

**15.** A process according to claim 13, wherein $R^4$ is perfluoro-1-butyl.

**16.** A process according to any preceding claim, wherein the solvent has a boiling point below 125°C.

**17.** A process according to claim 16, which additionally comprises concentrating the arylphosphine by removal of the solvent under reduced pressure.

**18.** A process according to claim 16 or claim 17, wherein the solvent is an aromatic hydrocarbon.

**19.** A process according to claim 18, wherein the solvent is toluene.

**20.** A process according to claim 16 or claim 17, wherein the solvent is acetonitrile.

**21.** A process according to any preceding claim, wherein the reaction mixture is substantially free of chelating phosphine.

**22.** A process according to any preceding claim, wherein the catalyst loading is less than 1%.

**23.** A process according to claim 22, wherein the catalyst loading is less than 0.5%.

**24.** A process according to any preceding claim, which comprises the additional step of converting the arylphosphine to a chiral phosphine ligand.

**25.** A process according to claim 24, wherein the chiral phosphine ligand is an enantiomerically enriched compound

of formula (1) or (2)

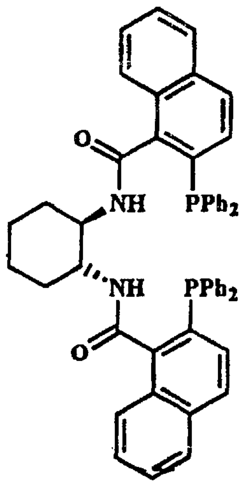

(1)

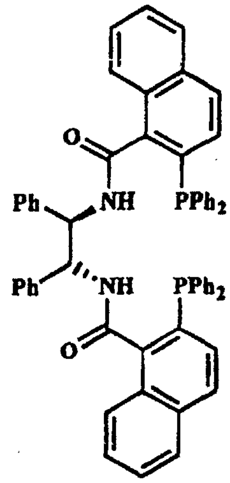

(2)

or the opposite enantiomer thereof.

## Patentansprüche

1. Verfahren zur Herstellung eines Arylphosphins der Formel

$$R^1OC\text{-}Ar\text{-}PR^2R^3$$

worin Ar Aryl oder Heteroaryl ist, $R^1$ eine Alkoxy- oder Amingruppe ist und $R^2$ und $R^3$ jeweils irgendeine Kohlenwasserstoffgruppe sind und jede der betreffenden Gruppen gegebenenfalls mit jeder nicht störenden Gruppe substituiert sein kann, welches umfasst die Reaktion einer Sulfonyloxyverbindung der Formel

$$R^1OC\text{-}Ar\text{-}OSO_2R^4$$

worin $R^4$ Alkyl, Halogenalkyl, Perhalogenalkyl, Aryl, Aralkyl oder Alkaryl ist, mit einem sekundären oder primären Phosphin der Formel $HPR^2R^3$ in einem Lösungsmittel und in Anwesenheit eines Palladiumkatalysators und einer Base.

2. Verfahren nach Anspruch 1, worin der Katalysator ein Palladium(II)salz ist.

3. Verfahren nach Anspruch 2, worin der Katalysator Palladium(II)acetat ist.

4. Verfahren nach irgendeinem vorhergehenden Anspruch, worin die Base ein tertiäres Amin ist.

5. Verfahren nach Anspruch 4, worin die Base Triethylamin ist.

6. Verfahren nach irgendeinem vorhergehenden Anspruch, worin $R^2$ und $R^3$ jeweils Aryl oder Alkyl sind.

7. Verfahren nach Anspruch 6, worin $R^2$ und $R^3$ jeweils gegebenenfalls substituiertes Phenyl sind.

8. Verfahren nach irgendeinem vorhergehenden Anspruch, worin Ar die Gruppen $COR^1$ und $OSO_2R^4$ in einer 1,2-Beziehung trägt.

9. Verfahren nach irgendeinem vorhergehenden Anspruch, worin die Sulfonyloxyverbindung die Formel

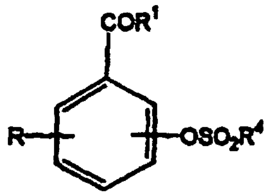

aufweist, worin R irgendein nicht störender Substituent ist oder einen kondensierten Ring darstellt, der gegebenenfalls irgendeinen nicht störenden Substituenten trägt.

10. Verfahren nach Anspruch 8 oder Anspruch 9, worin Ar Naphthyl ist.

11. Verfahren nach irgendeinem vorhergehenden Anspruch, worin $R^1$ Alkoxy, z.B. Methoxy, ist.

12. Verfahren nach Anspruch 8, worin das Arylphosphin die Formel

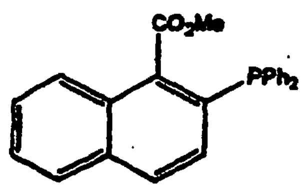

aufweist.

13. Verfahren nach irgendeinem vorhergehenden Anspruch, worin $R^4$ Perfluoralkyl ist.

14. Verfahren nach Anspruch 13, worin $R^4$ Trifluormethyl ist.

15. Verfahren nach Anspruch 13, worin $R^4$ Perfluor-1-butyl ist.

16. Verfahren nach irgendeinem vorhergehenden Anspruch, worin das Lösungsmittel einen Siedepunkt unter 125°C aufweist.

17. Verfahren nach Anspruch 16, welches zusätzlich die Konzentrierung des Arylphosphins durch Entfernung des Lösungsmittels unter vermindertem Druck umfasst.

18. Verfahren nach Anspruch 16 oder Anspruch 17, worin das Lösungsmittel ein aromatischer Kohlenwasserstoff ist.

19. Verfahren nach Anspruch 18, worin das Lösungsmittel Toluol ist.

20. Verfahren nach Anspruch 16 oder Anspruch 17, worin das Lösungsmittel Acetonitril ist.

21. Verfahren nach irgendeinem vorhergehenden Anspruch, worin die Reaktionsmischung im wesentlichen frei von chelatbildendem Phosphin ist.

22. Verfahren nach irgendeinem vorhergehenden Anspruch, worin die Katalysatorbeladung weniger als 1% beträgt.

23. Verfahren nach Anspruch 22, worin die Katalysatorbeladung weniger als 0,5% beträgt.

24. Verfahren nach irgendeinem vorhergehenden Anspruch, welches den zusätzlichen Schritt der Umwandlung des Arylphosphins in einen chiralen Phosphinliganden umfasst.

**25.** Verfahren nach Anspruch 24, worin der chirale Phosphinligand eine enantiomer angereicherte Verbindung der Formel (1) oder (2)

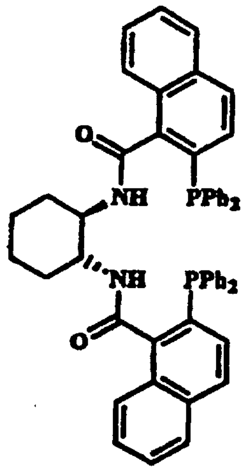

(1)

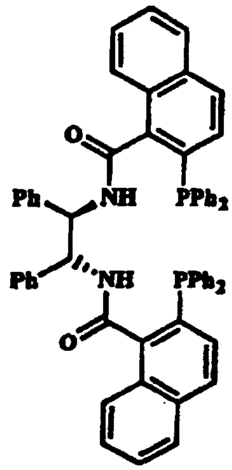

(2)

oder deren entgegengesetztes Enantiomer ist.

## Revendications

**1.** Procédé de préparation d'une arylphosphine de formule

$$R^1OC\text{-}Ar\text{-}PR^2R^3$$

dans laquelle Ar est un aryle ou un hétéroaryle ; $R^1$ est un alcoxy ou un groupe aminé ; et $R^2$ et $R^3$ sont chacun un groupe hydrocarboné quelconque ; et chacun des groupes respectifs peut être éventuellement substitué par un groupe non interférant quelconque ; lequel comprend la réaction d'un composé sulfonyloxy de formule

$$R^1OC\text{-}Ar\text{-}OSO_2R^4$$

dans laquelle $R^4$ est un alkyle, un halogénoalkyle, un perhalogénoalkyle, un aryle, un aralkyle ou un alkaryle, avec une phosphine secondaire ou primaire de formule $HPR^2R^3$, dans un solvant et en présence d'un catalyseur au palladium et d'une base.

**2.** Procédé selon la revendication 1, dans lequel le catalyseur est un sel de palladium (II).

**3.** Procédé selon la revendication 2, dans lequel le catalyseur est l'acétate de palladium (II).

**4.** Procédé selon l'une quelconque des revendications précédentes, dans lequel la base est une aminé tertiaire.

**5.** Procédé selon la revendication 4, dans lequel la base est la triéthylamine.

**6.** Procédé selon l'une quelconque des revendications précédentes, dans lequel $R^2$ et $R^3$ sont chacun un aryle ou un alkyle.

**7.** Procédé selon la revendication 6, dans lequel $R^2$ et $R^3$ sont chacun un phényle éventuellement substitué.

**8.** Procédé selon l'une quelconque des revendications précédentes, dans lequel Ar porte les groupes $COR^1$ et $OSO_2R^4$ en une relation 1,2.

**9.** Procédé selon l'une quelconque des revendications précédentes, dans lequel le composé sulfonyloxy est de formule

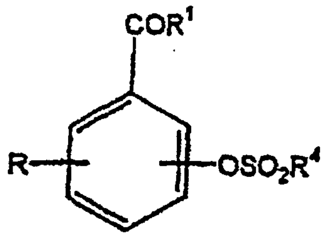

dans laquelle R est un substituant non interférant ou représente un cycle condensé portant éventuellement un substituant non interférant quelconque.

**10.** Procédé selon la revendication 8 ou la revendication 9, dans lequel Ar est un naphtyle.

**11.** Procédé selon l'une quelconque des revendications précédentes, dans lequel $R^1$ est un alcoxy, par exemple un méthoxy.

**12.** Procédé selon la revendication 8, dans lequel l'arylphosphine est de formule

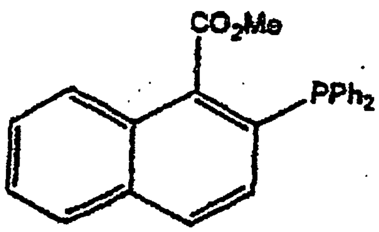

**13.** Procédé selon l'une quelconque des revendications précédentes, dans lequel $R^4$ est un perfluoroalkyle.

**14.** Procédé selon la revendication 13, dans lequel $R^4$ est un trifluorométhyle.

**15.** Procédé selon la revendication 13, dans lequel $R^4$ est un perfluoro-1-butyle.

**16.** Procédé selon l'une quelconque des revendications précédentes, dans lequel le solvant présente un point d'ébullition inférieur à 125°C.

**17.** Procédé selon la revendication 16, comprenant en outre la concentration de l'arylphosphine en éliminant le solvant sous pression réduite.

**18.** Procédé selon la revendication 16 ou la revendication 17, dans lequel le solvant est un hydrocarbure aromatique.

**19.** Procédé selon la revendication 18, dans lequel le solvant est le toluène.

**20.** Procédé selon la revendication 16 ou la revendication 17, dans lequel le solvant est l'acétonitrile.

**21.** Procédé selon l'une quelconque des revendications précédentes, dans lequel le mélange réactionnel est essentiellement exempt de phosphine chélatante.

**22.** Procédé selon l'une quelconque des revendications précédentes, dans lequel la charge de catalyseur est inférieure à 1%.

**23.** Procédé selon la revendication 22, dans lequel la charge de catalyseur est inférieure à 0,5%.

**24.** Procédé selon l'une quelconque des revendications précédentes, comprenant l'étape supplémentaire de transformation de l'arylphosphine en un ligand phosphine chiral.

**25.** Procédé selon la revendication 24, dans lequel le ligand phosphine chiral est un composé énantiomériquement enrichi de formule (1) ou (2)

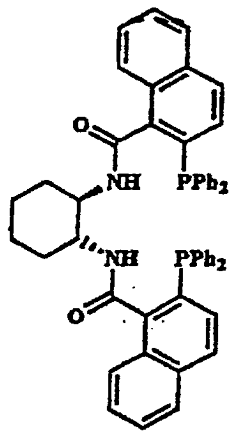

(1)

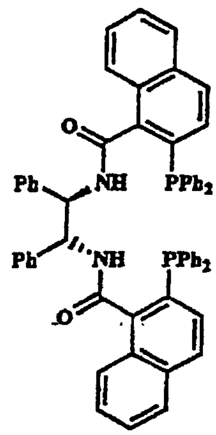

(2)

ou leur énantiomère opposé.